# EUROPÄISCHE PATENTANMELDUNG

(11) **EP 0 911 577 A2**
(43) Veröffentlichungstag der Anmeldung: **28.04.1999**
(21) Anmeldenummer: 98117201.8
(22) Anmeldetag: 09.09.1998
(51) Int. Cl.: F21V 5/02

(54) **Elektrische Leuchte**

(30) Priorität: 16.10.1997 DE 19745844
(71) Anmelder: Patent-Treuhand-Gesellschaft für elektrische Glühlampen mbH, 81543 München (DE)
(72) Erfinder: Enders, Martin, Dr., 81545 München (DE)

(57) **Zusammenfassung**

Die Erfindung betrifft eine mit einer elektrischen Lampe (2) und einem Reflektor (1) ausgestatteten elektrische Leuchte. Die erfindungsgemäße elektrische Leuchte besitzt eine unmittelbar vor der Reflektoröffnung angeordnete Mikroprismenfolie (3), die eine erste gerippte, mit Mikroprismen versehene Seite (3a) und eine zweite, eben Seite (3b) aufweist.

## Beschreibung

Die Erfindung betrifft eine elektrische Leuchte gemäß dem Oberbegriff des Patentanspruches 1.

Eine derartige elektrische Leuchte ist beispielsweise in dem deutschen Gebrauchsmuster DE 92 19 085 U1 offenbart. Das vorgenannte Dokument beschreibt eine elektrische Leuchte mit einer Lampe und einem Reflektor sowie einem als Prismenscheibe ausgebildeten Refraktorelement. Das Refraktorelement ist unmittelbar vor der Lichtaustrittsöffnung des Reflektors angeordnet.

Es ist die Aufgabe der Erfindung, eine elektrische Leuchte mit einer der Beleuchtungsfunktion als Fahrzeug-Signalleuchte oder als Fahrzeug-Innenraumleuchte oder als Deckenleuchte angepaßten Lichtverteilung bereitzustellen.

Diese Aufgabe wird erfindungsgemäß durch die kennzeichnenden Merkmale des Patentanspruchs 1 gelöst. Besonders vorteilhafte Ausführungen der Erfindung sind in den Unteransprüchen beschrieben.

Die erfindungsgemäße elektrische Leuchte ist mit einem unmittelbar an der Lichtaustrittsöffnung des Reflektors angeordneten, als Mikroprismenfolie ausgebildeten Refraktorelement ausgestattet, wobei die Mikroprismenfolie eine erste gerippte, mit Mikroprismen versehene Seite und eine zweite, ebene Seite besitzt. Bei einem ersten bevorzugten Ausführungsbeispiel der Erfindung ist die Mikroprismenfolie derart ausgebildet, daß sie die Lampe - insbesondere auch die nicht-leuchtenden Lampenenden - abdeckt und außerdem so angeordnet, daß ihre ebene Seite der Lampe zugewandt und ihre gerippte Seite von der Lampe abgewandt ist und die Rippen senkrecht zur Lampenlängsachse verlaufen. Durch das Zusammenwirken der auf diese Weise angeordneten Mikroprismenfolie mit dem Reflektor wird die Effizienz der Leuchte gesteigert und außerdem die Lichtverteilung derart beeinflußt, daß im Bereich der nicht-leuchtenden Enden der Lampe kein signifikanter Helligkeitsabfall auftritt. Die Reflexionsfläche des Reflektors ist vorteilhafterweise auf den Prismenwinkel und die Prismenhöhe der auf der Mikroprismenfolie angeordneten Mikroprismen abgestimmt. Diese Leuchte eignet sich vorteilhafterweise als Signalleuchte eines Fahrzeuges, beispielsweise zur Erzeugung des Rück- oder Bremslichtes.

Bei einem anderen Ausführungsbeispiel der erfindungsgemäßen elektrischen Leuchte ist die Mikroprismenfolie derart an der Lichtaustrittsöffnung des Reflektors angeordnet, daß die gerippte Seite der Mikroprismenfolie der Lampe zugewandt ist. Die Reflexionsfläche des Reflektors ist vorteilhafterweise auf den Prismenwinkel und die Prismenhöhe der auf der Mikroprismenfolie angeordneten Mikroprismen abgestimmt. Durch das Zusammenwirken der so angeordneten Mikroprismenfolie mit dem Reflektor wird die Lichtverteilung der Leuchte so beeinflußt, daß - unter sonst gleichen Bedingungen - eine größere Fläche ausgeleuchtet werden kann. Diese Leuchte eignet sich vorteilhafterweise als Deckenleuchte im Innenraum eines Fahrzeuges.

Nachstehend wird die Erfindung anhand zweier bevorzugter Ausführungsbeispiele näher erläutert. Es zeigen:

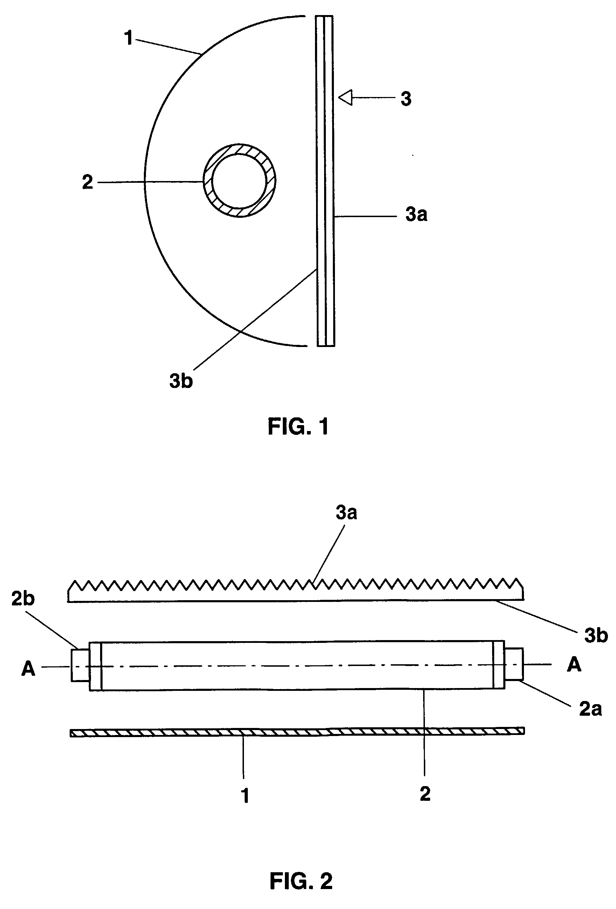

- Figur 1: einen Querschnitt durch eine elektrische Leuchte gemäß des ersten Ausführungsbeispiels der Erfindung in schematischer Darstellung, wobei die Schnittebene senkrecht zur Lampenlängsachse verläuft
- Figur 2: einen Querschnitt durch die in Figur 1 abgebildete elektrische Leuchte, wobei die Schnittebene parallel zur Lampenlängsachse verläuft

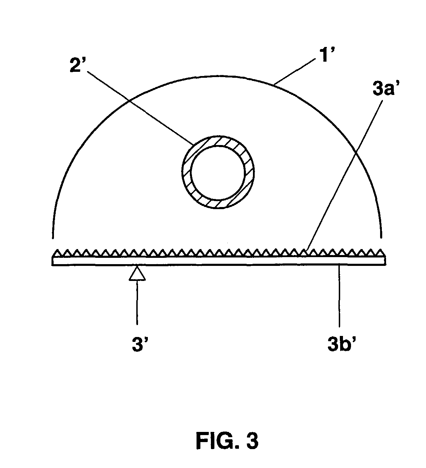

- Figur 3: einen Querschnitt durch eine elektrische Leuchte gemäß des zweiten Ausführungsbeispiels der Erfindung in schematischer Darstellung, wobei die Schnittebene senkrecht zur Lampenlängsachse verläuft

Beim ersten Ausführungsbeispiel der Erfindung handelt es sich um eine Kraftfahrzeug-Signalleuchte zur Erzeugung des Brems- und/oder Rücklichtes. Diese Leuchte besitzt einen rinnenartigen Reflektor 1 und eine darin angeordnete, stabförmige Neongasentladungslampe 2 sowie eine Mikroprismenfolie 3, die über der Lichtaustrittsöffnung des Reflektors 1 angebracht ist. Das Entladungsgefäß der Neongasentladungslampe 2 ist zweiseitig gesockelt und besitzt daher zwei nicht-leuchtende Enden 2a, 2b. Die Mikroprismenfolie 3 weist eine gerippte, mit Mikroprismen versehene Seite 3a und eine ebene Seite 3b auf. Die ebene Seite 3b der Mikroprismenfolie 3 ist der Lampe 2 und dem Reflektor 1 zugewandt, während die gerippte Seite 3a von der Lampe 2 und vom Reflektor 1 abgewandt ist. Außerdem ist die Mikroprismenfolie 3 derart angeordnet, daß die Mikroprismenfolie 3 die beiden nichtleuchtenden, gesockelten Lampenenden 2a, 2b abdeckt und die Rippen bzw. Mikroprismen 3a der Mikroprismenfolie 3 senkrecht zur Lampenlängsachse A-A verlaufen. Die Mikroprismenfolie 3 besteht aus einem lichtdurchlässigen Kunststoff und besitzt eine Dicke von ungefähr 0,23 mm. Die gerippte Seite 3a der Mikroprismenfolie 3 ist mit einer Vielzahl von parallel verlaufenden, als Prismen ausgebildeten Rippen 3a versehen. Diese Prismen 3a weisen jeweils einen Prismenwinkel von 90 Grad und eine Höhe von 50 µm auf.

Die Mikroprismenfolie 3 erhöht die Effizienz der Leuchte und sorgt für eine besser an die Beleuchtungsfunktion angepaßte Lichtverteilung der Leuchte. Licht, das in einem allzu spitzen Winkel auf die ebene Seite 3b auftrifft, wird von der Mikroprismenfolie 3 zum Reflektor 1 zurückreflektiert und kann die Leuchte erst nach nochmaliger Reflexion am Reflektor 1 verlassen, wenn der Auftreffwinkel auf die ebene Seite 3b im zulässigen Bereich liegt. Die nach Transmission durch die Mikroprismenfolie 3 aus der Leuchte austretenden Lichtkegel haben einen Öffnungswinkel von ungefähr 70 Grad. Die aus der Leuchte austretenden Lichtstrahlen bilden mit der Oberfläche der Mikroprismenfolie 3 einen Winkel zwischen ungefähr 55 Grad und 125 Grad. Mit Hilfe der Mikroprismenfolie 3 wird das Licht gebündelt, so daß kein Licht seitlich, bei den Lampenenden 2a, 2b aus der Leuchte austreten kann. Aufgrund der die Lampenenden 2a, 2b abdeckenden Mikroprismenfolie 3 emittiert die Leuchte sogar im Bereich der Lampenenden 2a, 2b Licht, und es tritt selbst in diesem Bereich kein signifikanter Helligkeitsabfall bei der Leuchte auf. Die Hauptabstrahlrichtung des von der Leuchte emittierten Lichtes verläuft hier senkrecht zur Mikroprismenfolie 3. Die die Leuchte verlassenden Lichtstrahlen bilden einen Winkel von ±35 Grad mit der Hauptabstrahlrichtung. Die Reflexionsfläche des Reflektors 1 wurde zu diesem Zweck mit Hilfe eines Computerprogrammes auf die Mikroprismenfolie 3, das heißt auf die Prismenwinkel und die Prismenhöhe der Mikroprismen 3a, abgestimmt.

Beim zweiten Ausführungsbeispiel der Erfindung handelt es sich um eine Deckenleuchte, die beispielsweise unter dem Dach eines Kraftfahrzeuges angebracht ist. Diese Leuchte besitzt einen rinnenartigen Reflektor 1' und eine darin angeordnete, stabförmige Leuchtstofflampe 2' sowie eine Mikroprismenfolie 3', die über der Lichtaustrittsöffnung des Reflektors 1' angebracht ist. Die Mikroprismenfolie 3' weist eine gerippte, mit Mikroprismen versehene Seite 3a' und eine ebene Seite 3b' auf. Diese Mikroprismenfolie 3' besitzt dieselben Eigenschaften wie die Mikroprismenfolie 3 des ersten Ausführungsbeispiels. Sie ist allerdings - im Unterschied zum ersten Ausführungsbeispiel - derart angeordnet, daß ihre gerippte Seite 3a' der Lampe 2' und dem Reflektor 1' zugewandt und ihre ebene Seite 3b' von der Lampe 2' und dem Reflektor 1' abgewandt ist. Die als Prismen 3a' ausgebildeten Rippen der Mikroprismenfolie 3' verlaufen parallel zur Lampenlängsachse.

Diese Anordnung ermöglicht eine bessere Innenraumausleuchtung des Fahrzeuges, da die Mikroprismenfolie 3' die senkrecht auf ihre gerippte Seite 3a' auftreffenden Lichtstrahlen jeweils in zwei symmetrisch bezüglich der Vertikalen abgewinkelte Lichtstrahlen aufspaltet.

## Patentansprüche

1. Elektrische Leuchte mit einem Reflektor und einem Refraktorelement, wobei die Leuchte eine Lampe (2; 2') aufweist und das Refraktorelement (3, 3') unmittelbar vor einer Lichtaustrittsöffnung des das von der Lampe (2, 2') erzeugte Licht reflektierenden Reflektors (1; 1') angeordnet ist,
dadurch gekennzeichnet, daß das Refraktorelement (3, 3') als Mikroprismenfolie ausgebildet ist, die eine gerippte, mit Mikroprismen versehene erste Seite (3a; 3a') und eine zweite, ebene Seite (3b; 3b') besitzt.

2. Elektrische Leuchte nach Anspruch 1, dadurch gekennzeichnet, daß die Lampe (2) eine stabförmige Lampe mit einer Längsachse (4) und mit mindestens einem nicht-leuchtenden Ende ist, wobei die Mikroprismenfolie (3) die Lampe (2) vollständig abdeckt.

3. Elektrische Leuchte nach Anspruch 1 oder 2, dadurch gekennzeichnet, daß
- die zweite, ebene Seite (3b) der Mikroprismenfolie (3) der Lampe (2) zugewandt und die erste gerippte Seite (3a) der Mikroprismenfolie (3) von der Lampe (2) abgewandt ist,
- die Rippen der Mikroprismenfolie (3) senkrecht zur Längsachse (4) der Lampe (2) verlaufen.

4. Elektrische Leuchte nach Anspruch 1, dadurch gekennzeichnet, daß der Reflektor (1, 1') auf die geometrischen Abmessungen der auf der Mikroprismenfolie (3) angeordneten Mikroprismen (3a) abgestimmt ist.

5. Elektrische Leuchte nach Anspruch 1, dadurch gekennzeichnet, daß die erste, gerippte Seite (3a') der Mikroprismenfolie (3') der Lampe (2') zugewandt und die zweite, ebene Seite (3b') der Mikroprismenfolie (3') von der Lampe (2') abgewandt ist.

6. Verwendung einer elektrischen Leuchte nach einem der Ansprüche 1 bis 5 als Fahrzeug-Signalleuchte, Fahrzeug-Innenraumleuchte oder Deckenleuchte.
